# EUROPÄISCHE PATENTSCHRIFT

(11) **EP 0 667 088 B1**
(45) Veröffentlichungstag und Bekanntmachung des Hinweises auf die Patenterteilung: **04.02.1998**
(21) Anmeldenummer: 93924013.1
(22) Anmeldetag: 02.11.1993
(51) Int. Cl.: H04M 1/72

(54) **ZEITSCHLITZAUSWAHL FÜR EINE FUNKVERBINDUNG, INSBESONDERE IN EINEM SCHNURLOS-TELEKOMMUNIKATIONSSYSTEM**
TIME SLOT SELECTION FOR A RADIO CONNECTION, PARTICULARLY IN A CORDLESS TELECOMMUNICATIONS SYSTEM
SELECTION DE TRANCHES DE TEMPS POUR UNE LIAISON RADIO, NOTAMMENT DANS UN SYSTEME DE TELECOMMUNICATION SANS FIL

(30) Priorität: 02.11.1992 DE 9214885 U
(43) Veröffentlichungstag der Anmeldung: 16.08.1995
(73) Patentinhaber: SIEMENS AKTIENGESELLSCHAFT, 80333 München (DE)
(72) Erfinder: PILLEKAMP, Klaus-Dieter, D-40699 Erkrath (DE)
(86) Internationale Anmeldenummer: DE9301044
(87) Internationale Veröffentlichungsnummer: WO9410811

(56) Entgegenhaltungen:
- GB-A- 2 249 922
- US-A- 5 134 710
- PATENT ABSTRACTS OF JAPAN vol. 16, no. 429 (E-1261)8. September 1992 & JP,A,41 050 116 (NTT)

## Beschreibung

Die Erfindung betrifft ein drahtloses Telekommunikationssystem, insbesondere ein Schnurlos-Telekommunikationssystem gemäß dem Oberbegriff des Patentanspruches 1.

In drahtlosen Telekommunikationssystemen - wie z. B. Mobilfunk- oder Schnurlos-Telekommunikationssysteme - mit mehreren, Telekommunikationsteilsysteme bildenden Basisstationen und Mobilteilen, die beispielsweise das Zeitlagegetrenntverfahren TDMA (Time Division Multiple Access) oder das Codelagegetrenntverfahren CDMA (Code Division Multiple Access) anwenden, kann eine optimale Kanalnutzung in den Telekommunikationsteilsystemen (im Sinne keiner gegenseitigen Störbeeinflussung der Kanäle in den Telekommunikationsteilsystemen) nur dann erreicht werden, wenn die z. B. auf das TDMA-Prinzip basierende Telekommunikationsteilsysteme synchronisiert (keine Drift zwischen Zeitbasen der Telekommunikationsteilsysteme) sind (synchrones drahtloses Telekommunikationssystem).

In asynchronen drahtlosen Telekommunikationssystemen dagegen, in denen eine Drift zwischen den Zeitbasen der Telekommunikationsteilsysteme auftritt, kann durch die Drift der Zeitbasen eine gegenseitige Störbeeinflussung der Kanäle der Telekommunikationsteilsysteme entstehen, die die insgesamt zu nutzende Kanalwahl in dem jeweiligen Telekommunikationsteilsystem in ungünstigen Fällen stark reduziert.

Aus der Druckschrift Patent Abstracts of Japan Vol. 16, No. 429 (E-1261), 8. September 1992 und JP-A-41 050 116 ist ein TDM-Funkkommunikationssystem bekannt, bei dem die durch Drift der Zeitbasen entstehenden Überlappungen von asynchronen Kanälen (Zeitschlitzen) dadurch minimiert werden, daß die Zuordnung der Kommunikationskanäle nur an solche freien Kanäle erfolgt, deren Zeitabstand zu ihrem jeweiligen nachfolgenden aktiven Kanal ein Maximum darstellt.

Aus der GB-2 249 922 A ist ein drahtloses Telekommunikationssystem bekannt, bei dem gegenseitige Störbeeinflussungen dadurch vermieden werden, daß vorab die Kollisionsgefahr mit einer anderen Station, die einen anderen Zeitschlitz gleicher Frequenz benutzt, abgeschätzt wird, so daß im drohenden Kollisionsfall auf freie Kanäle der anderen Station, die nicht von dieser benutzt werden, umgeschaltet werden kann.

Die der Erfindung zugrundeliegende Aufgabe besteht darin, ein drahtloses Telekommunikationssystem, insbesondere ein Schnurlos-Telekommunikationssystem, der eingangs genannten Art anzugeben, bei dem keine gegenseitige Störbeeinflussung von Telekommunikationsteilsystemen auftritt.

Diese Aufgabe wird ausgehend von dem in dem Oberbegriff des Patentanspruches 1 definierten drahtlosen Telekommunikationssystem durch die in dem kennzeichnenden Teil des Patentanspruches 1 angegebenen Merkmale gelöst.

Als wesentlich für die Erfindung ist dabei anzusehen, daß nur eine Teilmenge der insgesamt in den Telekommunikationsteilsystemen des drahtlosen Telekommunikationssystems verfügbaren Zeitschlitze (z. B. jeder zweite Zeitschlitz) verwendet wird. Damit verringert sich zwar die nutzbare Kanalkapazität des drahtlosen Telekommunikationsteilsystems bzw. Telekommunikationssystems, aber die verringerte Kanalkapazität ist insbesondere dann nicht kleiner, wenn zwar sämtliche in den Telekommunikationsteilsystemen verfügbaren Zeitschlitze verwendet werden, diese aber durch eine Störbeeinflussung, bei der ein Kanal a eines Telekommunikationsteilsystems A zwei Kanäle b1, b2 eines Telekommunikationsteilsystems B stört, nicht mehr alle, sondern nur zur Hälfte zur Verfügung stehen.

Vorteilhafte Weiterbildungen der Erfindung sind in den Unteransprüchen angegeben.

Ein Ausführungsbeispiel der Erfindung wird anhand der Zeichnungen beschrieben. Es zeigen:
Figur 1 den prinzipiellen Aufbau einer Basisstation bzw. eines Mobilteils eines Schnurlos-Telekommunikationsteilsystems,
Figur 2 einen TDMA-Zeitrahmen eines Schnurlos-Telekommunikationsteilsystems nach dem DECT-Standard,
Figur 3 ein Diagramm für jeweils zwei synchrone bzw. asynchrone auf dem TDMA-Prinzip basierende drahtlose Telekommunikationsteilsysteme und den Grad der Störbeeinflussung durch Kanäle der drahtlosen Telekommunikationsteilsysteme.

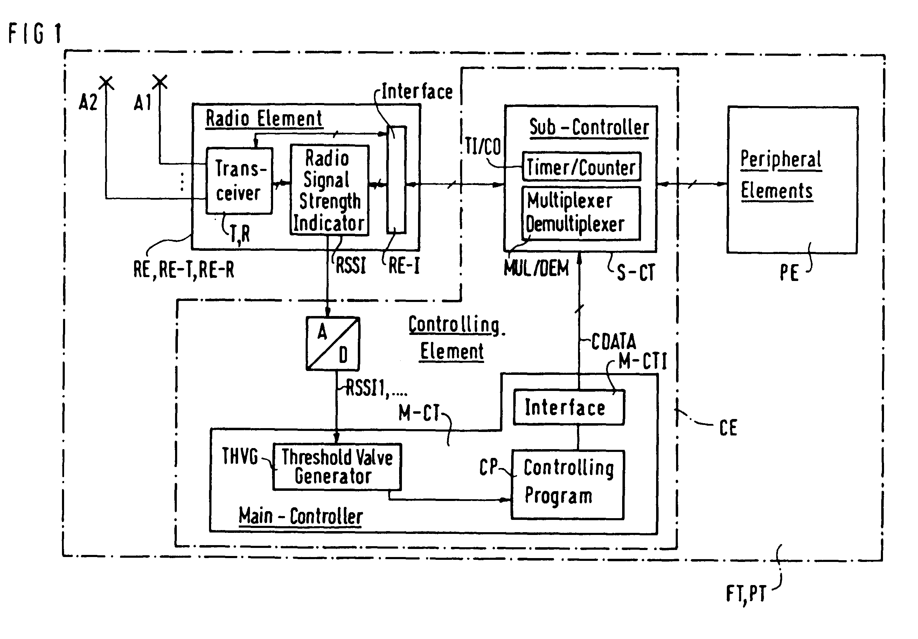

Figur 1 zeigt den prinzipiellen Schaltungsaufbau einer Basisstation FT oder eines Mobilteiles PT eines Schnurlos-Telekommunikationssystems. Sowohl die Basisstation FT als auch das Mobilteil PT enthalten ein Funkteil (Radio Element) RE - im folgenden auch als Sende-/Empfangseinrichtung RE-T, RE-R bezeichnet -, ein Steuerungsteil (Controlling Element) CE und periphere Schaltungsteile (Peripheral Elements) PE, die in dem Funktionsblock "Peripheral Elements" zusammengefaßt sind. Bei der folgenden Beschreibung wird davon ausgegangen, daß für das Schnurlos-Telekommunikationsteilsystem der DECT-Standard (Digital European Cordless Telecommunication) implementiert ist. Hierauf ist die Erfindung jedoch nicht eingeschränkt. So ist die Erfindung auch auf vergleichbare Standards, wie z. B. den CT2- oder GSM-Standard ohne weiteres anwendbar.

Während sich Basisstation FT und Mobilteil PT in bezug auf das Steuerungsteil CE und dem Funkteil RE bzw. der Sende-/Empfangseinrichtung RE-T,RE-R - im Umfang der erfindungsrelevanten Betrachtung - nicht unterscheiden, sind die peripheren Schaltungsteile PE der Basisstation FT bzw. des Mobilteils PT unterschiedlich ausgebildet.

So umfassen die peripheren Schaltungsteile PE bei der Basisstation FT - ausgehend von Basisstationen bekannter Schnurlos-Telefonsysteme (Wolf, Klaus: "Auch ohne Schnur "auf Draht"", Telcom Report 10, 1987, Heft 2, Seiten 130 ff., z. B. Seite 134) - z. B. interne Teilnehmerschaltungen bzw. Amts- oder Nebenstellenanlagenschaltungen mit vorgeschalteten ADPCM-Codier-/Decodiereinrichtungen und einen internen Peripherie-Controller, während in den peripheren Schaltungsteilen PE des Mobilteils PT - ausgehend von Mobilteilen bekannter Schnurlos-Telefonsysteme (Telcom Report 10, 1987, Heft 2, Seite 135) - z. B. ein Mikrofon, eine Piezo-Hörkapsel, ein Piezo-Tonruf, ein Akkumulator, eine Tastatur, eine LED-Anzeige, sowie NF- und Tonrufverstärker enthalten.

Die vorstehend genannten peripheren Schaltungsteile PE der Basisstation FT und des Mobilteils PT können, ohne jegliche Beschränkung der Erfindung auch durch andere Schaltungsteile ersetzt werden.

Die für die Erfindung relevanten Teile des Schaltungsaufbaus der Basisstation FT und des Mobilteiles PT nach Figur 1 sind das Funkteil RE bzw. die Sende-/Empfangseinrichtung RE-T, RE-R und das Steuerungsteil CE. Dem Funkteil RE sind dabei zur Übertragung und zum Empfang von Funksignalen (z. B. TDMAbzw. CDMA-Funksignale) zwei Antennen A1, A2 zugeordnet, die sowohl als Sende- als auch Empfangsantenne fungieren. Alternativ ist es ohne jegliche Einschränkung der Erfindung aber auch möglich, eine Antenne oder mehr als zwei Antennen dem Funkteil RE zuzuordnen.

Das Funkteil RE weist weiterhin - wie in Figur 1 durch drei Funktionsblöcke dargestellt - ein Sende-/Empfangsteil (Transceiver) T, R, eine Feldstärke-Meßeinrichtung (Radio Signal Strength Indicator) RSSI und eine Schnittstelleneinrichtung (Interface) RE-I auf, die in dem Funkteil RE in der dargestellten Weise miteinander verbunden sind. Die Feldstärke-Meßeinrichtung RSSI mißt die Feldstärke der über die Antennen A1, A2 und in dem Sende-/Empfangsteil T, R selektierten Funksignale.

Die Feldstärke-Meßeinrichtung RSSI dient allgemein der Prüfung, ob ein Kanal belegt ist (vgl. DECT-Draft prETS 300 175-3: 1991, page 164). Die Vorschrift, wie die Feldstärke zu messen ist, wird im DECT-Standard angegeben (vgl. DECT-Draft prETS 300 175-2: 1991, page 31, 6.2 und page 38, 8.3). Die Kanalbelegung wird dabei durch das Messen der Feldstärke (Mindestfeldstärke) empfangener Funksignale festgestellt, wobei die Meßergebnisse RSSI1, ... anschließend über einen Analog-/Digitalwandler A/D einem in einem Hauptprozessor M-CT des Steuerungsteils CE integrierten Schwellwertgenerator (THreshold Value Generator) THVG zugeführt werden. Der Schwellwertgenerator THVG bildet dabei im laufenden Betrieb der Basisstation FT bzw. des Mobilteils PT fortwährend aktualisierte Werte, die von dem Hauptprozessor M-CT in ein Steuerprogramm (Controlling Program) CP eingebunden werden und zur Ansteuerung der Antennen A1, A2 dienen. Mit den von dem Schwellwertgenerator THVG erhaltenen Informationen über die Kanalbelegung (Eingangsgröße) werden von dem Steuerprogramm CP Steuerdaten (Controlling DATA) CDATA gebildet, die über eine Hauptprozessorschnittstelle M-CTI einem Subprozessor (Sub-Controller) S-CT zugeführt werden.

Der Subprozessor S-CT wird in der Basisstation FT als Time Switch Controller und in dem Mobilteil PT als Burst Mode Controller bezeichnet. Dem Subprozessor S-CT ist unter anderem eine Multiplex-/Demultiplexeinheit MUL/DEM zugeordnet, die 1,152 Mbit/s-Daten im DECT-Burstformat erzeugt bzw. empfängt. Darüber hinaus übernimmt der Subprozessor S-CT Steuerungsaufgaben für das Funkteil RE und die peripheren Schaltungsteile PE. Bei der Basisstation FT ordnet die Multiplex-/Demultiplexeinheit MUL/DEM des Subprozessors S-CT den empfangenen bzw. zu sendenden Datenpaketen beispielsweise bis zu sechs interne bzw. drei externe Telefonverbindungen im Zeitlagegetrenntverfahren TDMA (Time Division Multiple Access) bzw. im Codelagegetrenntverfahren CDMA (Code Division Multiple Access) zu. Darüber hinaus enthält der Subprozessor S-CT eine Zeitsteuerungs-/Zähleinrichtung (Timer/Counter) TI/CO, der dem Subprozessor S-CT insbesondere in bezug auf das zeitliche Auftreten von Bits, Zeitschlitzen und TDMA- bzw. CDMA-Rahmen taktet.

Die Funktionsweise der schnurlosen Telekommunikation in einem Schnurlos-Telekommunikationssystem mit der Basisstation FT und dem Mobilteil PT nach Figur 1 ist durch die bereits genannten Druckschriften (Telcom Report 10, 1987, Heft 2, Seiten 130 ff. und DECT-Draft prETS 175-3: 1991, ganzes Dokument) prinzipiell angedeutet. So werden in dem Schnurlos-Telekommunikationsteilsystem bidirektionalen (Sender-/Empfänger bzw. Empfänger-/Sender) Funkverbindungen mehrere Frequenzen (FDMA = Frequenzy Division Multiple Access) und diesen anschließend mehrere Zeitschlitze (Time Slots) von Zeitmultiplexkanälen (TDMA = Time Division Multiple Access) zugeordnet. Dabei wird bei der bidirektionalen Funkverbindung in dem Schnurlos-Telekommunikationsteilsystem zwischen der Basisstation FT und dem Mobilteil PT Sprache zum einen sendeseitig komprimiert sowie übertragen und zum anderen empfangen sowie empfangsseitig expandiert.

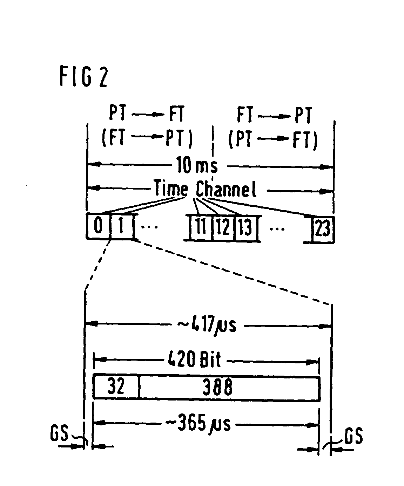

Um die gegenseitige Störbeeinflussung durch Kanäle der Schnurlos-Telekommunikationsteilsysteme in einem drahtlosen Telekommunikationssystem klein zu halten, ist das dem Hauptprozessor M-CT des Steuerungsteils CE in der Basisstation FT bzw. dem Mobilteil TT nach Figur 1 zugeordnete Steuerungsprogramm CP in der Weise ausgestaltet, daß mit den dem Sub-Prozessor S-CT zugeführten Steuerdaten CDATA aus einer Menge vorgegebener Zeitschlitze (Figur 2) nur eine Teilmenge nicht unmittelbar aufeinanderfolgender Zeitschlitze (z. B. nur jeder zweite Zeitschlitz 0, 2, 4, ... 10, 12, 14, ... 22; bzw. 0, 3, 6, 9, 12, 15, 18, 21) für die Funkverbindungen ausgewählt wird.

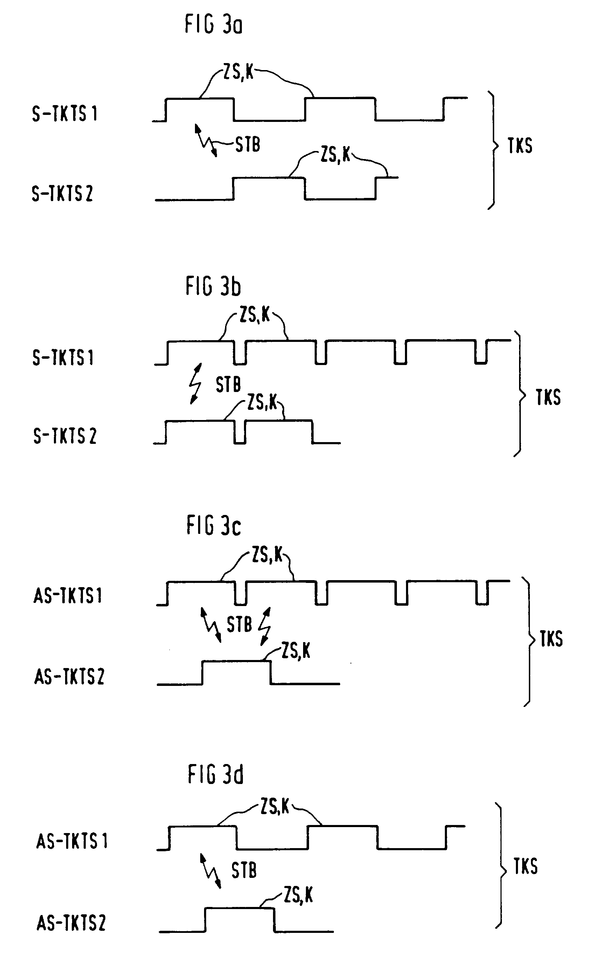

Figur 2 zeigt einen DECT-spezifischen TDMA-Zeitrahmen für Schnurlos-Telefonsysteme nach dem DECT-Standard. Für die schnurlose Kommunikation nach dem DECT-Standard wird eine dynamische Kanalauswahl von ca. 120 verfügbaren Kanälen durchgeführt. Die 120 Kanäle ergeben sich daraus, daß bei dem DECT-Standard zehn Frequenzbänder zwischen 1,8 und 1,9 GHz verwendet werden, wobei in jedem Frequenzband gemäß der Darstellung in Figur 3 im Zeitmultiplex (TDMA = Time Division Multiple Access) mit einem Zeitmultiplexrahmen von 10 ms gearbeitet wird. In diesem Zeitmultiplexrahmen werden 24 (von 0 bis 23) Zeitkanäle definiert und dadurch ein Rahmenschema vorgegeben. Dieses Rahmenschema wird dann derart benutzt, daß für jedes Frequenzband z. B. 12 Mobilteile PT mit einer Basisstation FT eines DECT-Kommunikationssystems gleichzeitig im Duplexbetrieb (PT-FT und FT-PT bzw. FT-PT und PT-FT) arbeiten können. Den 24 Zeitkanälen wird dabei ein Zeitschlitz (Time Slot) von jeweils 417 µs zugeordnet. Dieser Zeitschlitz gibt dabei die Zeit an, in der Informationen (Daten) übertragen werden. Dieses Übertragen der Informationen im Duplexbetrieb wird auch als Ping-Pong-Verfahren bezeichnet, weil zu einem bestimmten Zeitpunkt gesendet und zu einem anderen Zeitpunkt empfangen wird. Bei diesem Ping-Pong-Verfahren wird in jedem Zeitschlitz ein Zeitrahmen oder Impuls (Burst) von 365 µs, was in etwa einer Rahmenlänge von 420 Bits entspricht, mit einem Datendurchsatz von 42 kbit/s übertragen. Bezogen auf den Zeitmultiplexrahmen ergibt sich unter Berücksichtigung, daß in einem Sicherheitszeitrahmen (Guard Space = GS) an beiden Enden des Zeitrahmens jeweils 30 Bit zur Vermeidung von Überlappungen durch angrenzende Zeitschlitze zur Verfügung stehen, ein Gesamt-Datendurchsatz von 1,152 Mbit/s.

Figur 3 veranschaulicht gegenseitige Störbeeinflussung STB von zwei synchronen drahtlosen Telekommunikationsteilsystemen S-TKTS1, S-TKTS2 (Figur 3a, Figur 3b) und asynchronen drahtlosen Telekommunikationsteilsystemen AS-TKTS1, AS-TKTS2 (Figur 3c, Figur 3d) eines drahtlosen Telekommunikationssystems TKS in bezug auf Zeitschlitze ZS bzw. Kanäle K der Telekommunikationsteilsysteme.

Das drahtlose Telekommunikationssystem TKS ist synchron, wenn zwischen den Zeitbasen ZB1, ZB2 der Telekommunikationsteilsysteme S-TKTS1, S-TKTS2 eine fest vorgegebene und konstante Phase (keine Drift) besteht. Im Unterschied dazu ist das drahtlose Telekommunikationssystem TKS asynchron, wenn zwischen den Zeitbasen ZB1, ZB2 der Telekommunikationsteilsysteme AS-TKTS1, AS-TKTS2 eine veränderliche Phase (Drift der Zeitbasen ZB1, ZB2) besteht.

Der Grad der Störbeeinflussung STB der synchronen Telekommunikationsteilsysteme S-TKTS1, S-TKTS2 nach Figur 3a beträgt aufgrund der gegenphasigen Synchronität 0 %, während er bei den synchronen Telekommunikationsteilsystemen S-TKTS1, S-TKTS2 nach Figur 3b aufgrund der gleichphasigen Synchronität 100 % beträgt.

Der Grad der Störbeeinflussung STB bei dem asynchronen Telekommunikationsteilsystem AS-TKTS1, AS-TKTS2 nach Figur 3c liegt je nach Größe der Drift der Zeitbasen ZB1, ZB2 der Telekommunikationsteilsysteme AS-TKTS1, AS-TKTS2 zwischen 100 % (Maximalwert) und knapp über 50 % (Minimalwert).

Der Grad der Störbeeinflussung STB bei den erfindungsgemäßen asynchronen Telekommunikationsteilsystemen AS-TKTS1, AS-TKTS2 nach Figur 3d beträgt im statistischen Mittel 50 %, wenn im Unterschied zu dem asynchronen Telekommunikationssystem TKS nach Figur 3c beispielsweise nur jeder zweite Zeitschlitz ZS ausgewählt wird. Dies ist gleichbedeutend damit, daß zwischen den zwei ausgewählten Zeitschlitzen ZS ein weiterer Zeitschlitz angeordnet ist, der nicht für Funkverbindungen verwendet wird.

## Patentansprüche

1. Drahtloses Telekommunikationssystem, insbesondere Schnurlos-Telekommunikationssystem, mit mehreren jeweils ein drahtloses Telekommunikationsteilsystem (AS-TKTS1, AS-TKTS2) bildenden Basisstationen (FT) und Mobilteilen (PT), wobei die Basisstationen (FT) bzw. die Mobilteile (PT) jeweils eine Schaltungsanordnung (RE, CE, M-CT, S-CT) aufweisen, der ein in der Weise ausgestaltetes Steuerungsprogramm (CP) zugeordnet ist, daß Funkverbindungen auf vorgegebenen Frequenzen (Frequency Division Multiple Access FDMA) und in mehreren Zeitschlitzen (ZS) von Zeitmultiplexkanälen (Time Division Multiple Access TDMA) erfolgen, **dadurch gekennzeichnet**, daß das Steuerungsprogramm (CP) weiterhin in der Weise ausgestaltet ist, daß aus einer Menge vorgegebener Zeitschlitze (ZS) nur eine Teilmenge nicht unmittelbar aufeinanderfolgender Zeitschlitze (ZS) für die Funkverbindungen ausgewählt wird.

2. Drahtloses Telekommunikationssystem nach Anspruch 1, **dadurch gekennzeichnet,** daß aus der Menge der vorgegebenen Zeitschlitze (ZS) nur jeder zweite Zeitschlitz (ZS) für die Funkverbindungen ausgewählt wird.

## Claims

1. Wire-free telecommunications system, preferably a cordless telecommunications system, having a plurality of base stations (FT) and mobile elements (PT) which each form a wire-free telecommunications subsystem (AS-TKTS1, AS-TKTS2), the base stations (FT) and the mobile elements (PT) respectively having a circuit arrangement (RE, CE, M-CT, S-CT) to which there is assigned a controlling program (CP) which is designed in such a manner that radio links take place at predetermined frequencies (Frequency Division Multiple Access FDMA) and in a plurality of time slots (ZS) in time-division multiplex channels (Time Division Multiple Access TDMA), **characterized in that** the controlling program (CP) is furthermore designed in such a manner that only a subset of time slots (ZS) which do not follow one another directly is selected, from a number of predetermined time slots (ZS), for the radio links.

2. Wire-free telecommunications system according to Claim 1, **characterized in that** only every other time slot (ZS) is selected, from the number of predetermined time slots (ZS), for the radio links.

## Revendications

1. Système de télécommunication radioélectrique, notamment système de télécommunication sans cordon, avec plusieurs postes de base (FT) et unités mobiles (PT), formant respectivement un sous-système de télécommunication radioélectrique (AS-TKTS1, AS-TKTS2), les postes de base (FT) et les unités mobiles (PT) comportant un dispositif de circuits (RE, CE, M-CT, S-CT) auquel est affecté un programme de commande (CP) constitué de telle sorte que les communications radioélectriques ont lieu sur des fréquences prédéterminées (AMF = Accès avec Multiplexage en Fréquence ou, anglo-saxon, FDMA = Frequency Division Multiple Access) et pendant plusieurs tranches de temps (ZS) des voies.de multiplexage temporel (Accès Multiple à Répartition dans le Temps AMRT ou, anglo-saxon, Time Division Multiple Access TDMA), **caractérisé par le fait** que le programme de commande (CP) est, en outre, constitué de telle sorte qu'on ne choisit, pour les communications radioélectriques, dans un ensemble de tranches de temps (ZS) prédéterminées, qu'un sous-ensemble de tranches de temps (ZS) qui ne se suivent pas directement.

2. Système de télécommunication radioélectrique selon la revendication 1 **caractérisé par le fait** qu'on ne choisit, pour les communications radioélectriques, dans l'ensemble des tranches de temps (ZS) prédéterminées, qu'une tranche de temps (ZS) sur deux.
